# EUROPEAN PATENT APPLICATION

(11) **EP 4 429 307 A1**
(43) Date of publication of application: **11.09.2024**
(21) Application number: 21962990.4
(22) Date of filing: 05.11.2021
(51) Int. Cl.: H04W 24/02

(54) **NETWORK SLICE STATE INFORMATION REPORTING METHOD AND APPARATUS**

(71) Applicant: Beijing Xiaomi Mobile Software Co., Ltd., Beijing 100085 (CN)
(72) Inventor: SHEN, Yang, Beijing 100085 (CN)
(74) Representative: Stöckeler, Ferdinand
(86) International application number: PCT/CN2021/129147
(87) International publication number: WO 2023/077477

(57) **Abstract**

Embodiments of the present application disclose a network slice state information reporting method and apparatus, which can be applied to communication systems, such as a fifth generation (5G) mobile communication system, a 5G new radio (NR) system, or other future novel mobile communication systems. The method comprises: receiving a network slice state subscription request; generating network slice state response information; and sending the network slice state response information to a response information receiver. By receiving the network slice state subscription request, generating corresponding state response information and feeding same to the response information receiver, network slice state information uploading errors are avoided, thereby facilitating the improvement of user experience.

## Description

### TECHNICAL FIELD

The present disclosure relates to the field of communication technology, and particularly to a method and an apparatus for reporting state information of a network slice.

### BACKGROUND

In wireless communications, a network slice may provide complete network functions (NFs), such as a radio access network function, a core network function, and an Internet protocol (IP) multimedia subsystem (IMS) function. The network may support one or more network slices. The network slices may provide different committed services and may be specific to users. The same services or slices with different slice identifiers may have different single network slice selection assistance information (S-NSSAI).

The network slice admission control function (NSACF) is used to monitor a number of registered user equipment (UE) and a number of protocol data unit (PDU) sessions for a network slice that supports the NSAC function.

When a plurality of NSACFs are deployed in a network, it is still a problem to be solved in a 5th-generation (5G) network how the network obtains accurately and in real time state information of these network slices, such as a current number of UEs registered in a slice, a number of currently-activated PDU sessions, a ratio of the current number of registered UEs in the slice and/or a number of activated packet control unit (PCU) sessions to an overall threshold of the slice, and how the network effectively transmits the obtained information to an application function (AF) or application service provider (ASP) as needed to ensure a correct execution of the function and a process optimization, as well as a good service experience for users.

### SUMMARY

Embodiments of the present disclosure provides a method and an apparatus for reporting state information of a network slice, which may be applied to communication systems such as a 5G mobile communication system, a 5G new radio (NR) system, or other future new mobile communication systems. By receiving a first slice event subscription request sent by an AF or ASP, and generating corresponding state response information to feed back to the AF or ASP, errors in uploading the state information of the network slice may be avoided, which facilitates improving user experiences.

In a first aspect, an embodiment of the present disclosure provides a method for reporting state information of a network slice. The method includes: receiving a network slice state subscription request; generating network slice state response information; and sending the network slice state response information to a response information recipient.

Optionally, the network slice state subscription request is a first network slice state subscription request, the first network slice state subscription request is sent by an AF or an ASP, and the AF or ASP is the response information recipient. The first network slice state subscription request includes at least one of a subscription event, subscription event filtering information, or subscription event reporting mode information.

Optionally, the subscription event includes at least one of:
a number of UEs registered on the requested network slice;
a number of PDU sessions established on a requested network slice;
a ratio of a number of UEs registered on a requested network slice to a maximum number of UEs allowed to be registered;
a ratio of a number of PDU sessions established on a requested network slice to a maximum number of PDU sessions allowed to be established;
a number of UEs registered on a requested network slice, and a ratio of the number of UEs registered to a maximum number of UEs allowed to be registered; or
a number of PDU sessions established on a requested network slice, and a ratio of the number of PDU sessions established to a maximum number of PDU sessions allowed to be established.

Optionally, the subscription event filtering information includes at least one of:
S-NSSAI of a requested network slice;
a registration area (RA) of a requested network slice;
a combination of S-NSSAI of a requested network slice and a data network name (DNN); or
an area of interest (IoA) of a requested network slice.

Optionally, the subscription event reporting mode information includes at least one of: a threshold that triggers reporting; or a periodic time interval for triggering reporting

Optionally, the first network slice state subscription request further includes an immediate reporting identifier, in which the immediate reporting identifier is used to indicate the first NSACF to immediately send the network slice state response information upon receiving the first network slice state subscription request.

Optionally, when the network slice state subscription request is a second network slice state subscription request, the second network slice state subscription request is sent by an AF or an ASP, and the AF or ASP is the response information recipient, the second network slice state subscription request includes a requested network slice, and the requested network slice corresponds to a plurality of NSACFs, and generating the network slice state response information includes:
sending a state subscription request for the requested network slice to a second NSACF among the plurality of NSACFs corresponding to the requested network slice, in which the second NSACF belongs to the plurality of NSACFs corresponding to the requested network slice;
receiving state information of the requested network slice fed back by the second NSACF; and
generating the network slice state response information based on the state information of the requested network slice fed back by the second NSACF.

Optionally, when the network slice state subscription request is a third network slice state subscription request, the third network slice state subscription request is sent by a third NSACF, the third NSACF is the response information recipient, the third NSACF is one of second NSACFs, the third network slice state subscription request includes a requested network slice, the requested network slice corresponds to a plurality of NSACFs, and the method further includes:
sending a state subscription request for the requested network slice to all the second NSACFs in the requested network slice;
receiving all state information of the requested network slice fed back by the second NSACFs; and
generating the network slice state response information based on all the state information of the requested network slice fed back by the second NSACFs, and returning the network slice state response information to the third NSACF.

Optionally, generating the network slice state response information includes: aggregating the state information of the requested network slice fed back by the second NSACF to generate the network slice state response information.

Optionally, the first NSACF is selected by an AF or an ASP based on a network configuration or an operator policy.

Optionally, the first NSACF is a primary NSACF or a proxy NSACF among a plurality of NSACFs corresponding to a requested network slice.

Optionally, the second network slice state subscription request or the third network slice state subscription request includes at least one of a subscription event, subscription event filtering information, and subscription event reporting mode information.

Optionally, the method further includes: querying the plurality of NSACFs corresponding to the requested network slice through a network repository function (NRF); or obtaining the plurality of NSACFs corresponding to the requested network slice through a local configuration.

Optionally, the method further includes: filtering the network slice state response information based on the subscription event filtering information.

Optionally, the method further includes: determining whether a reporting condition is met based on the subscription event reporting mode information; and in response to the reporting condition being met, reporting the network slice state response information.

Optionally, the receiving a network slice state subscription request includes: when an AF or an ASP that sends the network slice state subscription request is an untrusted AF or ASP, receiving the network slice state subscription request sent by the AF or ASP through a network exposure function (NEF).

Optionally, the first NSACF is selected by the NEF.

Optionally, the first NSACF is selected by the NEF through an NRF or a local configuration.

Optionally, the network slice state response information includes state information sent by a plurality of NSACFs corresponding to a requested network slice, in which the network slice state response information is generated by the first NSACF aggregating state information sent by the plurality of NSACFs in the network slice state response information;
when the first NSACF does not aggregate the state information sent by the plurality of NSACFs in the network slice state response information, the network slice state response information is generated by the NEF aggregating the state information sent by the plurality of NSACFs in the network slice state response information.

In a second aspect, an embodiment of the present disclosure provides a method for reporting state information of a network slice. The method includes: receiving a first network slice state subscription request sent by an AF or an ASP; sending the first network slice state subscription request to a first NSACF; receiving network slice state response information sent by the first NASCF; and sending the network slice state response information to the AF or ASP.

Optionally, the method further includes: selecting the first NSACF from a plurality of NSACFs corresponding to the network slice.

Optionally, selecting the first NSACF from the plurality of NSACFs corresponding to the network slice includes: selecting the first NSACF from the plurality of NSACFs corresponding to the network slice through an NRF; or selecting the first NSACF from the plurality of NSACFs corresponding to the network slice through a local configuration.

Optionally, the method further includes: aggregating state information sent by the plurality of NSACFs, in the network slice state response information sent by the first NASCF.

Optionally, when the AF or ASP is an untrusted AF or ASP, the method further includes:
receiving a first network slice state subscription request sent by the AF or ASP, mapping an application identifier or a service identifier of the AF or ASP in the first network slice state subscription request to S-NSSAI, and sending a replaced first network slice state subscription request to the first NSACF; and
receiving the network slice state response information sent by the first NSACF, mapping the S-NSSAI in the network slice state response information to an application identifier or a service identifier, and send a replaced network slice state response information to the AF or ASP.

Optionally, the first network slice state subscription request includes at least one of a subscription event, subscription event filtering information, and subscription event reporting mode information.

Optionally, the subscription event includes at least one of:
a number of UEs registered on a requested network slice;
a number of PDU sessions established on a requested network slice;
a ratio of a number of UEs registered on a requested network slice to a maximum number of UEs allowed to be registered;
a ratio of a number of PDU sessions established on a requested network slice to a maximum number of PDU sessions allowed to be established;
a number of UEs registered on a requested network slice, and a ratio of the number of UEs registered to a maximum number of UEs allowed to be registered; or
a number of PDU sessions established on a requested network slice, and a ratio of the number of PDU sessions established to a maximum number of PDU sessions allowed to be established.

Optionally, the subscription event filtering information includes at least one of:
S-NSSAI of a requested network slice;
an RA of a requested network slice;
a combination of S-NSSAI of a requested network slice and a DNN; or
an IoA of a requested network slice.

Optionally, the subscription event reporting mode information includes at least one of: a threshold that triggers reporting; or a periodic time interval for triggering reporting.

Optionally, the first network slice state subscription request further includes an immediate reporting identifier, in which the immediate reporting identifier is used to indicate the first NSACF to immediately send the network slice state response information upon receiving the first network slice state subscription request.

In a third aspect, an embodiment of the present disclosure provides a method for reporting state information of a network slice, applied to an AF or an ASP, the method includes: sending a first network slice state subscription request to a first NSACF; and receiving network slice state response information sent by the first NSACF.

Optionally, the first network slice state subscription request includes at least one of a subscription event, subscription event filtering information, and subscription event reporting mode information.

Optionally, the subscription event includes at least one of:
a number of UEs registered on a requested network slice;
a number of PDU sessions established on a requested network slice;
a ratio of a number of UEs registered on a requested network slice to a maximum number of UEs allowed to be registered;
a ratio of a number of PDU sessions established on a requested network slice to a maximum number of PDU sessions allowed to be established;
a number of UEs registered on a requested network slice, and a ratio of the number of UEs registered to a maximum number of UEs allowed to be registered; or
a number of PDU sessions established on a requested network slice, and a ratio of the number of PDU sessions established to a maximum number of PDU sessions allowed to be established.

Optionally, the subscription event filtering information includes at least one of:
S-NSSAI of a requested network slice;
an RA of a requested network slice;
a combination of S-NSSAI of a requested network slice and a DNN; or
an IoA of a requested network slice.

Optionally, the subscription event reporting mode information includes at least one of: a threshold that triggers reporting; or a periodic time interval for triggering reporting.

Optionally, the first network slice state subscription request further includes an immediate reporting identifier, in which the immediate reporting identifier is used to indicate the first NSACF to immediately send the network slice state response information upon receiving the first network slice state subscription request.

Optionally, the method further includes: selecting the first NSACF based on a network configuration; or selecting the first NSACF based on an operator policy.

Optionally, the first NSACF is a primary NSACF or a proxy NSACF among a plurality of NSACFs corresponding to a requested network slice.

Optionally, the method further includes: querying a plurality of NSACFs corresponding to a requested network slice through an NRF; or obtaining a plurality of NSACFs corresponding to a requested network slice through a local configuration.

In a fourth aspect, an embodiment of the present disclosure provides a communication device, which has the function of implementing some or all of the functions of the terminal device in the method described in the above first aspect. For example, the functions of the communication device may have the functions of some or all of the embodiments in the present disclosure, and may also have the functions of implementing any one of the embodiments in the present disclosure alone. The functions may be implemented in hardware, or in hardware executing corresponding software. The hardware or software includes one or more units or modules corresponding to the above functions.

In an implementation, the structure of the communication device may include a transceiving module and a processing module, and the processing module is configured to support the communication device to execute corresponding functions in the above method. The transceiving module is used to support a communication between the communication device and other device. The communication device may further include a storage module, which is coupled to the transceiving module and the processing module and stores computer programs and data necessary for the communication device.

As an example, the processing module may be a processor, the transceiving module may be a transceiver or a communication interface, and the storage module may be a memory.

In an implementation, the communication device includes: a first receiving module, configured to receive a network slice state subscription request; a processing module, configured to generate network slice state response information; and a first sending module, configured to send the network slice state response information to a response information recipient.

In a fifth aspect, an embodiment of the present disclosure provides another communication device, which has some or all of the functions of the network device in the method example described in the above second aspect. For example, the functions of the communication device may have some or all of the functions in the embodiments of the present disclosure, or may have the functions of implementing any one of the embodiments of the present disclosure alone. The functions may be implemented in hardware, or in hardware executing corresponding software. The hardware or software includes one or more units or modules corresponding to the above functions.

In an implementation, the structure of the communication device may include a transceiving module and a processing module, and the processing module is configured to support the communication device to execute corresponding functions in the above method. The transceiving module is used to support communication between the communication device and other device. The communication device may further include a storage module, which is coupled to the transceiving module and the processing module and stores computer programs and data necessary for the communication device.

As an example, the processing module may be a processor, the transceiving module may be a transceiver or a communication interface, and the storage module may be a memory.

In an implementation, the communication device includes: a second receiving module, configured to receive a first network slice state subscription request sent by an AF or an ASP; a second sending module, configured to send the first network slice state subscription request to a first NSACF; a third receiving module, configured to receive network slice state response information sent by the first NASCF; and a third sending module, configured to send the network slice state response information to the AF or ASP.

In the sixth aspect, an embodiment of the present disclosure provides another communication device, which has some or all of the functions of the network device in the method example described in the above third aspect. For example, the functions of the communication device may have some or all of the functions in the embodiments of the present disclosure, and may also have the functions of implementing any one of the embodiments of the present disclosure alone. The functions may be implemented in hardware, or in hardware executing corresponding software. The hardware or software includes one or more units or modules corresponding to the above functions.

A fourth sending module is configured to send a first network slice state subscription request to a first NSACF.

A fourth receiving module is configured to receive network slice state response information sent by the first NSACF.

In an implementation, the structure of the communication device may include a transceiving module and a processing module, and the processing module is configured to support the communication device to execute corresponding functions in the above method. The transceiving module is used to support the communication between the communication device and other device. The communication device may further include a storage module, which is coupled to the transceiving module and the processing module and stores computer programs and data necessary for the communication device.

As an example, the processing module may be a processor, the transceiving module may be a transceiver or a communication interface, and the storage module may be a memory.

In a seventh aspect, an embodiment of the present disclosure provides a communication device, which includes a processor. When the processor calls a computer program in a memory, the method described in the first aspect is executed.

In an eighth aspect, an embodiment of the present disclosure provides a communication device, which includes a processor. When the processor calls a computer program in a memory, the method described in the second aspect is executed.

In a ninth aspect, an embodiment of the present disclosure provides a communication device, which includes a processor. When the processor calls a computer program in a memory, the method described in the third aspect is executed.

In the tenth aspect, an embodiment of the present disclosure provides a communication device, which includes a processor and a memory storing a computer program. The processor executes the computer program so that the communication device executes the method described in the above first aspect.

In the eleventh aspect, an embodiment of the present disclosure provides a communication device, which includes a processor and a memory storing a computer program. The processor executes the computer program so that the communication device executes the method described in the above second aspect.

In the twelfth aspect, an embodiment of the present disclosure provides a communication device, which includes a processor and a memory storing a computer program. The processor executes the computer program so that the communication device executes the method described in the above third aspect.

In a thirteenth aspect, an embodiment of the present disclosure provides a communication device, which includes a processor and an interface circuit. The interface circuit is used to receive and transmit code instructions to the processor. The processor is used to run the code instructions to enable the communication device to execute the method described in the above first aspect.

In a fourteenth aspect, an embodiment of the present disclosure provides a communication device, which includes a processor and an interface circuit. The interface circuit is used to receive and transmit code instructions to the processor. The processor is used to run the code instructions to enable the communication device to execute the method described in the above second aspect.

In a fifteenth aspect, an embodiment of the present disclosure provides a communication device, which includes a processor and an interface circuit. The interface circuit is used to receive and transmit code instructions to the processor. The processor is used to run the code instructions to enable the communication device to execute the method described in the above third aspect.

In the sixteenth aspect, an embodiment of the present disclosure provides a system for reporting state information of a network slice. The system includes the communication device described in the fourth aspect, the communication device described in the fifth aspect, and the communication device described in the sixth aspect. Alternatively, the system includes the communication device described in the seventh aspect, the communication device described in the eighth aspect, and the communication device described in the ninth aspect. Alternatively, the system includes the communication device described in the tenth aspect, the communication device described in the eleventh aspect, and the communication device described in the twelfth aspect. Alternatively, the system includes the communication device described in the thirteenth aspect, the communication device described in the fourteenth aspect, and the communication device described in the fifteenth aspect.

In the seventeenth aspect, an embodiment of the present disclosure provides a computer-readable storage medium storing instructions used by the above terminal device. When the instructions are executed, the terminal device executes the method described in the first aspect.

In an eighteenth aspect, an embodiment of the present disclosure provides a readable storage medium for storing instructions used by the above network device. When the instructions are executed, the network device executes the method described in the above second aspect.

In the nineteenth aspect, an embodiment of the present disclosure provides a readable storage medium for storing instructions used by the above network device. When the instructions are executed, the network device executes the method described in the above second aspect.

In the twentieth aspect, the present disclosure also provides a computer program product including a computer program, which, when executed on a computer, enables the computer to execute the method described in the above first aspect.

In the twenty-first aspect, the present disclosure also provides a computer program product including a computer program, which, when executed on a computer, enables the computer to execute the method described in the above second aspect.

In the twenty-second aspect, the present disclosure also provides a computer program product including a computer program, which, when executed on a computer, enables the computer to execute the method described in the above third aspect.

In the twenty-third aspect, the present disclosure provides a chip system including at least one processor and an interface, for supporting the terminal device to implement the functions involved in the first aspect, for example, determining or processing at least one of the data and information involved in the above method. In a possible design, the chip system also includes a memory, which is used to store computer programs and data necessary for the terminal device. The chip system may be composed of chips, or may include chips and other discrete devices.

In the twenty-fourth aspect, the present disclosure provides a chip system, which includes at least one processor and an interface, for supporting a network device to implement the functions involved in the second aspect, for example, determining or processing at least one of the data and information involved in the above method. In a possible design, the chip system also includes a memory, which is used to store computer programs and data necessary for the network device. The chip system may be composed of chips, or may include chips and other discrete devices.

In the twenty- fifth aspect, the present disclosure provides a chip system, which includes at least one processor and an interface, for supporting a network device to implement the functions involved in the third aspect, for example, determining or processing at least one of the data and information involved in the above method. In a possible design, the chip system also includes a memory, which is used to store computer programs and data necessary for the network device. The chip system may be composed of chips, or may include chips and other discrete devices.

In the twenty-sixth aspect, the present disclosure provides a computer program which, when executed on a computer, enables the computer to execute the method described in the above first aspect.

In the twenty-seventh aspect, the present disclosure provides a computer program which, when executed on a computer, enables the computer to execute the method described in the above second aspect.

In the twenty-eighth aspect, the present disclosure provides a computer program which, when executed on a computer, enables the computer to execute the method described in the above third aspect.

### BRIEF DESCRIPTION OF THE DRAWINGS

In order to more clearly illustrate the technical solutions in the embodiments of the present disclosure or the background art, the drawings for use in the embodiments of the present disclosure or the background art will be described below.
FIG. 1 is an architecture diagram illustrating a communication system according to an embodiment of the present disclosure.
FIG. 2 is a flowchart illustrating a method for reporting state information of a network slice according to an embodiment of the present disclosure.
FIG. 3 is a flowchart illustrating a method for reporting state information of a network slice according to an embodiment of the present disclosure.
FIG. 4 is a flowchart illustrating a method for reporting state information of a network slice according to an embodiment of the present disclosure.
FIG. 5 is a flowchart illustrating a method for reporting state information of a network slice according to an embodiment of the present disclosure.
FIG. 6 is a flowchart illustrating a method for reporting state information of a network slice according to an embodiment of the present disclosure.
FIG. 7 is a flowchart illustrating a method for reporting state information of a network slice according to an embodiment of the present disclosure.
FIG. 8 is a structural diagram illustrating an apparatus for reporting state information of a network slice according to an embodiment of the present disclosure.
FIG. 9 is a structural diagram illustrating another apparatus for reporting state information of a network slice according to an embodiment of the present disclosure.
FIG. 10 is a structural diagram illustrating a chip according to an embodiment of the present disclosure.
FIG. 11 is a flowchart illustrating a method for reporting state information of a network slice according to an embodiment of the present disclosure.
FIG. 12 is a flowchart illustrating a method for reporting state information of a network slice according to an embodiment of the present disclosure.

### DETAILED DESCRIPTION

To facilitate understanding, the terms involved in this disclosure are first introduced.

### 1. Network Slice Admission Control function (NSACF)

NSACF is used to monitor a number of registered UEs and a number of PDU sessions in a network slice that supports a NSAC function. NSACF also configures access type information of S-NSSAI that performs the NSAC function, i.e., 3GPP access type, non-3GPP access type, or one supporting both access types.

Each NSACF configures a maximum number of UEs allowed to access the network slice and a maximum number of PDU sessions allowed to be activated. NSACF supports monitoring and admission control of a maximum number of UEs and a maximum number of PDU sessions within a public land mobile network (PLMN). When a number of UEs registered to the current slice exceeds a certain threshold (such as a maximum number of UEs in the slice), the NSAC may reject UE registration to control a number of UEs served not to exceed the maximum number of UEs in the slice configured by the network. When a number of PDU sessions activated in a slice exceeds a certain threshold (such as a maximum number of activated sessions), the NSAC may reject activation of a PDU session to control a current number of sessions not to exceed the maximum number of sessions configured by the network.

### 2. Application Function (AF) and Application Service Provider (ASP)

The AF or ASP, based on ensuring the user experience or a need of improving the user experience, needs to obtain state information of a network slice, such as a current number of UEs registered in the slice, a number of currently-activated PDU sessions, a ratio of the current number of registered UEs and/or the current number of activated PCU sessions in the slice to an overall threshold of the slice.

In order to better understand the method for reporting state information of a network slice in an embodiment of the present disclosure, the communication system to which the embodiment of the present disclosure is applicable is first described below.

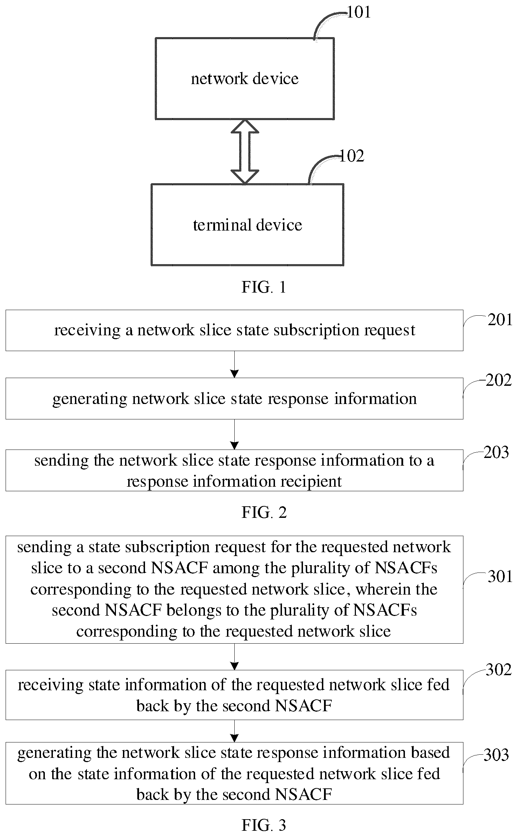

Referring to FIG. 1, it is an architecture diagram illustrating a communication system according to an embodiment of the present disclosure. The communication system may include but is not limited to one network device and one terminal device. The number and form of the devices shown in FIG. 1 are as an example only and do not constitute a limitation on embodiments of the present disclosure. In actual applications, two or more network devices and two or more terminal devices may be included. The communication system shown in FIG. 1 includes a network device 101 and a terminal device 102 as an example.

It should be noted that the technical solutions of embodiments of the present disclosure may be applied to various communication systems, for example, a 5G mobile communication system, a 5G NR system, or other future new mobile communication systems. It should also be noted that a sidelink in the embodiments of the present disclosure can also be called a side link or a direct link.

The network device 101 in the embodiments of the present disclosure is an entity on the network side for transmitting or receiving signals. For example, the network device 101 may be an evolved NodeB (eNB), a transmission reception point (TRP), a next generation NodeB (gNB) in an NR system, a base station in other future mobile communication systems, or an access node in a wireless fidelity (Wi-Fi^{™}) system, etc. The embodiments of the present disclosure do not limit the specific technology and specific device form adopted by the network device. The network device according to the embodiments of the present disclosure may be composed of a central unit (CU) and a distributed unit (DU). The CU may also be called a control unit. The CU-DU structure may be used to split a protocol layer of a network device such as a base station, so that some functions of the protocol layer are placed in the CU for central control, while the remaining part or all of the functions of the protocol layer are distributed in the DU, which is centrally controlled by the CU.

The terminal device 102 in the embodiments of the present disclosure is an entity on a UE side for receiving or transmitting signals, such as a mobile phone. The terminal device may also be called a terminal, a user equipment (UE), a mobile station (MS), a mobile terminal (MT), etc. The terminal device may be a car with a communication function, a smart car, a mobile phone, a wearable device, a tablet computer, a computer with a wireless transceiving function, a virtual reality (VR) terminal device, an augmented reality (AR) terminal device, a wireless terminal device in industrial control, a wireless terminal device in self-driving, a wireless terminal device in a remote medical surgery, a wireless terminal device in a smart grid, a wireless terminal device in transportation safety, a wireless terminal device in a smart city, a wireless terminal device in a smart home, etc. The embodiments of the present disclosure do not limit the specific technology and specific device form adopted by the terminal device.

The network slice may provide complete network functions such as radio access network functions, core network functions, and IMS functions. A network may support one or more network slices. The network slice may provide different committed services and be specific to users. The same services or slices with different slice identifiers may have different S-NSSAI.

A plurality of network slices deployed by a mobile network operator (MNO) may provide exactly the same functionality, but for different UE groups, since the network slices provide different committed services and/or are dedicated to customers. In this case, such network slices may have different S-NSSAIs for the same slices, or have different slice identifiers for the same service type.

The selection of a set of network slice instances for the UE is typically triggered by the first contacted Access and Mobility Management Function (AMF) during a registration process through an interaction with a Network Slice Selection Function (NSSF) and may result in changes to the AMF. Per PLMN, a PDU session belongs to only one specific network slice instance. Although different network slice instances may have PDU sessions for a specific slice using the same DNN, the different network slice instances do not share the PDU sessions. During a switching process, a source AMF selects a target AMF by interacting with a NF Repository Function (NRF).

A network slice type (NEST) is applied to a network slice, and a network slice is usually supported by a plurality of network slice instances. A generic network slice template (GST) template defines an attribute supported by the network slice.

NSACF is used to monitor a number of registered UEs and a number of PDU sessions for network slices that support the NSAC function. NSACF also configures access type information of S-NSSAI that performs the NSAC function, i.e., 3GPP access type, non-3GPP access type, or one supporting both access types.

Each NSACF configures a maximum number of UEs allowed to access the network slice and a maximum number of PDU sessions allowed to be activated. NSACF supports monitoring and admission control of a maximum number of UEs and a maximum number of PDU sessions within a PLMN. When a number of UEs registered to the current slice exceeds a certain threshold (such as a maximum number of UEs in the slice), the NSAC may reject UE registration to control a number of UEs served not to exceed the maximum number of UEs in the slice configured by the network. When a number of PDU sessions activated in a slice exceeds a certain threshold (such as a maximum number of activated sessions), NSAC may reject activation of a PDU session to control a current number of sessions not to exceed the maximum number of sessions configured by the network.

A plurality of NSACFs may be deployed in an operator network. One NSACF may serve one or more S-NSSAI slices in one service area. In one service area, one S-NSSAI is processed by only one NSACF, which may be one NSACF instance or one NSACF Set. One PLMN may have one or more service areas.

The AF or ASP, based on ensuring the user experience or a need of improving the user experience, needs to obtain state information of a network slice, including information such as a current number of UEs registered in the slice, a number of currently-activated PDU sessions, a ratio of the current number of registered UEs and/or the number of activated PCU sessions in the slice to an overall threshold of the slice.

However, when a plurality of NSACFs are deployed in the network, t is still a problem to be solved in a 5G network how the network obtains accurately and in real time state information of these network slices, such as a current number of UEs registered in the slice, a number of currently-activated PDU sessions, a ratio of the current number of UEs registered in the slice and/or the number of activated PCU sessions to an overall threshold of the slice, and how the network effectively transmits the obtained information to the AF or ASP as needed to ensure a correct execution of the function and a process optimization, as well as a good service experience for users.

It may be understood that the communication system described in the embodiments of the present disclosure aims at more clearly illustrating the technical solution of the embodiments of the present disclosure, and does not constitute a limitation on the technical solution in the embodiments of the present disclosure. Those skilled in the art may know that with the evolution of the system architecture and the emergence of new service scenarios, the technical solutions in the embodiments of the present disclosure is also applicable to a similar technical problem.

The method and apparatus for reporting state information of a network slice in this disclosure are described in detail below in conjunction with the accompanying drawings.

Referring to FIG. 2, it is a flowchart illustrating a method for reporting state information of a network slice according to an embodiment of the present disclosure. This method is applied to a first NSACF. As shown in FIG. 2, the method may include but is not limited to the following steps at 201-203.

At step 201, a network slice state subscription request is received.

In the embodiments of the present disclosure, a network slice is an on-demand networking way that allows operators to separate a plurality of virtual end-to-end networks on a unified infrastructure. Each network slice is logically isolated from a wireless access network, to a bearer network, to a core network, so as to adapt to various types of applications. In a network slice, it may be divided into at least three parts: a wireless network sub-slice, a bearer network sub-slice and a core network sub-slice. NSACF is used to monitor the number of registered UEs and PDU sessions for the network slice that supports the NSAC function. NSACF also configures the access type information of S-NSSAI that performs the NSAC functions.

The AF or ASP needs to subscribe to or cancel a reporting notify of network slice state information to a specific NSACF (i.e., the first NSACF) in a requested network slice according to service requirements. This is achieved by sending a first network slice state subscription request to the first NSACF. The requested network slice includes one NSACF, i.e., the first NSACF. The first NSACF receives the first network slice state subscription request sent by the AF or ASP.

At 202, network slice state response information is generated.

In an embodiment of the present disclosure, after the first NSACF receives the first network slice state subscription request sent by the AF or ASP, the first NSACF parses a subscription event, subscription event filtering information and subscription event reporting mode information from the first network slice state subscription request, and aggregates state information of the requested network slice according to the first network slice state subscription request to generate state response information of the requested network slice.

At 203, the network slice state response information is sent to a response information recipient.

In an embodiment of the present disclosure, after generating the network slice state response information, the first NSACF sends the network slice state response information to the response information recipient. The state information required by the response information recipient is fed back to the response information recipient. The response information recipient may be the AF or ASP, or may be a third NSACF in the network slice.

By implementing the embodiments of the present disclosure, it is possible to receive a first slice event subscription request sent by the AF or ASP, and generate corresponding state response information to feed back to the AF or ASP. In this way, errors in uploading the state information of the network slice may be avoided, which facilitates improving user experiences.

Optionally, Optionally, the network slice state subscription request is a first network slice state subscription request, the first network slice state subscription request is sent by an AF or an ASP, and the AF or ASP is the response information recipient. The first network slice state subscription request includes at least one of a subscription event, subscription event filtering information, or subscription event reporting mode information.

Optionally, the subscription event includes at least one of:
a number of UEs registered on the requested network slice;
a number of PDU sessions established on a requested network slice;
a ratio of a number of UEs registered on a requested network slice to a maximum number of UEs allowed to be registered;
a ratio of a number of PDU sessions established on a requested network slice to a maximum number of PDU sessions allowed to be established;
a number of UEs registered on a requested network slice, and a ratio of the number of UEs registered to a maximum number of UEs allowed to be registered; or
a number of PDU sessions established on a requested network slice, and a ratio of the number of PDU sessions established to a maximum number of PDU sessions allowed to be established.

Each NSACF configures a maximum number of UEs allowed to access the network slice and a maximum number of PDU sessions allowed to be activated. NSACF supports monitoring and admission control of a maximum number of UEs and a maximum number of PDU sessions within a PLMN. When a number of UEs registered to the current slice exceeds a certain threshold (such as a maximum number of UEs in the slice), the NSAC may reject UE registration to control a number of UEs served not to exceed the maximum number of UEs in the slice configured by the network. When s number of PDU sessions activated in a slice exceeds a certain threshold (such as a maximum number of activated sessions), the NSAC may reject activation of a PDU session to control a current number of sessions not to exceed the maximum number of sessions configured by the network.

One NSACF may be deployed in the operator network. One NSACF may serve one or more S-NSSAI slices in one service area. In the service area, one S-NSSAI is processed by only one NSACF, which may be one NSACF instance or one NSACF Set. A PLMN may have one or more service areas.

The AF or ASP, based on ensuring the user experience or a need of improving the user experience, needs to obtain state information of a network slice, including information such as a current number of UEs registered in the slice, a number of currently-activated PDU sessions, a ratio of the current number of registered UEs and/or the number of activated PCU sessions in the slice to an overall threshold of the slice.

Optionally, the subscription event filtering information includes at least one of:
S-NSSAI of a requested network slice;
an RA of a requested network slice;
a combination of S-NSSAI of a requested network slice and a DNN; or
an IoA of a requested network slice.

In embodiments of the present disclosure, the subscription event filtering information is used to define a scope that needs to be reported, such as the slice identifier S-NSSAI, the RA, the combination of the S-NSSAI and the DNN, the IoA, etc.

Optionally, the subscription event reporting mode information includes at least one of: a threshold that triggers reporting; or a periodic time interval for triggering reporting

In embodiments of the present disclosure, the subscription event reporting mode information is used to define a reporting mode. If a reporting information parameter is a threshold that triggers the reporting, the current value is reported when the threshold is reached. If the reporting information parameter is a periodic time interval that triggers the reporting, the current value is reported when the periodic time interval is reached.

Optionally, the first network slice state subscription request further includes an immediate reporting identifier, in which the immediate reporting identifier is used to indicate the first NSACF to immediately send the network slice state response information upon receiving the first network slice state subscription request.

Referring to FIG. 3, it is a flowchart illustrating a method for reporting state information of a network slice according to an embodiment of the present disclosure. As shown in FIG. 3, if the network slice state subscription request is a second network slice state subscription request, the second network slice state subscription request is sent by an AF or an ASP, and the AF or ASP is the response information recipient. The second network slice state subscription request includes a requested network slice, and the requested network slice corresponds to a plurality of NSACFs. The method may include but is not limited to the following steps at 301-303.

At 301, a state subscription request for a requested network slice is sent to a second NSACF among a plurality of NSACFs corresponding to the requested network slice. The second NSACF belongs to the plurality of NSACFs corresponding to the requested network slice.

In this embodiment of the present disclosure, the requested network slice includes a plurality of NSACFs, and the AF or ASP needs to subscribe to or cancel a reporting notify of network slice state information to a specific NSACF (i.e., the second NSACF) in the requested network slice according to service requirements. The second network slice state subscription request comes from the AF or ASP and is a request for the second NSACF. The requested network slice corresponds to a plurality of second NSACFs, which is achieved by sending the second network slice state subscription request to the second NSACF. The second NSACF belongs to a plurality of NSACFs in the requested network slice. The second NSACF receives the second network slice state subscription request.

In a possible embodiment, the requested network slice includes a plurality of NSACFs, and the AF or ASP needs to subscribe to or cancel a reporting notify of network slice state information to a specific NSACF (i.e., the second NSACF) in the requested network slice according to service requirements. The second network slice state subscription request comes from the AF or ASP and is a request for the second NSACF. The requested network slice corresponds to one second NSACF, which is achieved by sending the second network slice state subscription request to the second NSACF. The second NSACF belongs to a plurality of NSACFs in the requested network slice. The second NSACF receives the second network slice state subscription request.

At 302, state information of the requested network slice fed back by the second NSACF is received.

In an embodiment of the present disclosure, after the second network slice state subscription request is received, the second NSACF parses the subscription event, the subscription event filtering information and the subscription event reporting mode information from the second network slice state subscription request, and aggregates the state information of the requested network slice according to the second network slice state subscription request to generate state response information of the requested network slice.

At 303, the network slice state response information is generated according to the state information of the requested network slice fed back by the second NSACF.

In an embodiment of the present disclosure, after the network slice state response information is generated, the second NSACF sends the network slice state response information to the AF or ASP, and feeds back the state information required by the AF or ASP to the AF or ASP.

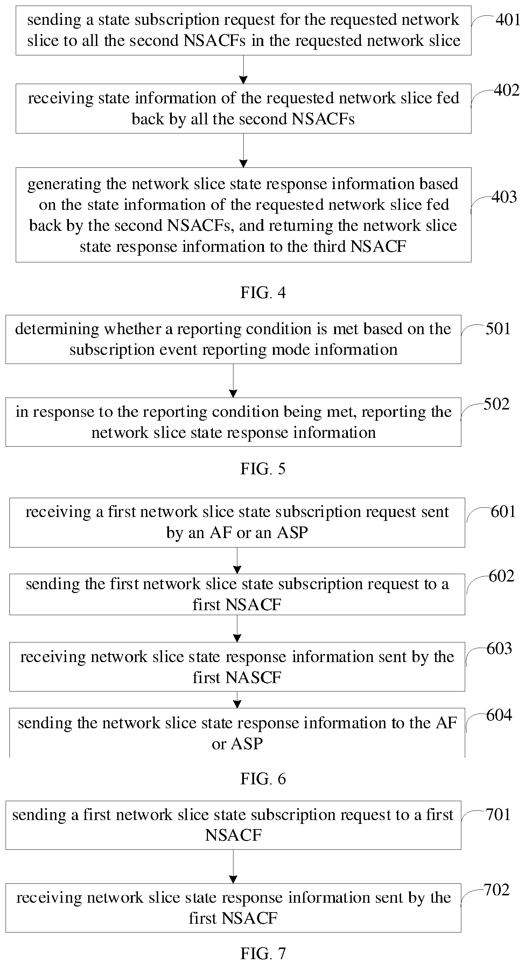

Referring to FIG. 4, it is a flowchart illustrating a method for reporting state information of a network slice according to an embodiment of the present disclosure. As shown in FIG. 4, if the network slice state subscription request is a third network slice state subscription request, the third network slice state subscription request is sent by a third NSACF. The third NSACF is the response information recipient, and the third NSACF is one of second NSACFs. The third network slice state subscription request includes a requested network slice, and the requested network slice corresponds to a plurality of NSACFs. The step of generating network slice state response information includes the following steps at 401-403.

At 401, a state subscription request for the requested network slice is sent to all the second NSACFs in the requested network slice.

At 402, state information of the requested network slice fed back by all the second NSACFs is received.

At 403, the network slice state response information is generated based on the state information of the requested network slice fed back by the second NSACFs, and the network slice state response information is returned to the third NSACF.

In an embodiment of the present disclosure, the first NSACF receives a third network slice state subscription request sent by some NSACF (the third NSACF) in the second NSACFs, where the third network slice state subscription request includes the requested network slice. The first NSACF then sends a state subscription request for the requested network slice to all the second NSACFs in the requested network slice, receives the state information of the requested network slice fed back by all the second NSACFs, generates the network slice state response information based on the state information of the requested network slice fed back by the second NSACFs, and returns the network slice state response information to the third NSACF in the second NSACFs that sends the subscription request. In this embodiment of the present disclosure, an initial subscription trigger does not come from the AF or ASP, but from the third NSACF of the requested network slice. The first NSACF acts as a primary/proxy point for all the NSACFs to perform aggregation and make response to the subscription information.

Optionally, generating the network slice state response information includes: aggregating the state information of the requested network slice fed back by the second NSACF to generate the network slice state response information.

In an embodiment of the present disclosure, after the second NSACF receives the second network slice state subscription request, the second NSACF parses the subscription event, the subscription event filtering information and the subscription event reporting mode information from the second network slice state subscription request, and aggregates the state information of the requested network slice based on the second network slice state subscription request to generate the state response information of the requested network slice.

Optionally, the first NSACF is selected by the AF or ASP based on a network configuration or an operator policy.

Optionally, the first NSACF is a primary NSACF or a proxy NSACF among a plurality of NSACFs corresponding to a requested network slice.

In embodiments of the present disclosure, NSACF-P (that is, the first NSACF) can be the primary NSACF in the requested slice, or the proxy NSACF in the requested slice. When NSACF-P is a primary NSACF, other NSACFs in the slice are slave NSACFs. When NSACF-P is a proxy NASCF, the NSACF and other NSACFs in the slice do not have a master-slave relationship.

Optionally, the second network slice state subscription request or the third network slice state subscription request includes at least one of a subscription event, subscription event filtering information, and subscription event reporting mode information.

Optionally, the method further includes: querying the plurality of NSACFs corresponding to the requested network slice through an NRF; or obtaining the plurality of NSACFs corresponding to the requested network slice through a local configuration.

Optionally, the method further includes: filtering the network slice state response information based on the subscription event filtering information.

In an embodiment of the present disclosure, the subscription event filtering information is used to indicate the scope that needs to be reported, including one of: S-NSSAI, RA, a combination of S-NSSAI and DNN, and IoA. According to the subscription event filtering information, network slice state response information required by AF or ASP is filtered out of the network slice state response information.

Referring to FIG. 5, it is a flowchart illustrating a method for reporting state information of a network slice according to an embodiment of the present disclosure. As shown in FIG. 5, the method may include but is not limited to the following steps at 501-502.

At 501, it is determined whether a reporting condition is met based on the subscription event reporting mode information.

At 502, in response to the reporting condition being met, the network slice state response information is reported.

In an embodiment of the present disclosure, the subscription event reporting mode information includes a threshold, or a periodic report including a periodic time interval. If a reporting information parameter is a threshold that triggers the reporting, the current value is reported when the threshold is reached. If the reporting information parameter is a periodic time interval that triggers the reporting, the current value is reported when the periodic time interval is reached.

Optionally, receiving the network slice state subscription request includes: when an AF or an ASP that sends the network slice state subscription request is an untrusted AF or ASP, receiving the network slice state subscription request sent by the AF or ASP through an NEF.

In an embodiment of the present disclosure, the first NSACF sends a Nnsacf_EventExposure_Subscribe/usubsubscribe Response (i.e., the network slice state response information) to the AF or ASP. After the first NSACF receives a slice event subscription request from the AF/ASP, the first NSACF subscribes to a reporting event of the requested slice to each NSACF in the requested slice. After the first NSACF receives the reporting information from each NSACF, the first NSACF notifies the reporting information to the requesting AF/ASP.

When an operating policy does not expose a slice identifier to an untrusted AF/ASP, and the current AF/ASP is an untrusted AF/ASP, the network slice state subscription request may be sent to NSACF via NEF. The above-mentioned Nnsacf_EventExposure subscribe/unsubscribe Request message is replaced with an Nnef_EventExposure subscribe/unsubscribe Request message between AF/ASP and NEF, and an Nnsacf_EventExposure subscribe/unsubscribe Request message between NEF and NSACF.

Optionally, the first NSACF is selected by the NEF.

Optionally, the first NSACF is selected by the NEF through an NRF or a local configuration.

Optionally, the network slice state response information includes state information sent by a plurality of NSACFs corresponding to a requested network slice, where the network slice state response information is generated by the first NSACF aggregating state information sent by to the plurality of NSACFs in the network slice state response information;
when the first NSACF does not aggregate the state information sent by the plurality of NSACFs in the network slice state response information, the network slice state response information is generated by the NEF aggregating the state information sent by the plurality of NSACFs in the network slice state response information.

Referring to FIG. 6, it is a flowchart illustrating a method for reporting state information of a network slice according to an embodiment of the present disclosure. As shown in FIG. 6, the method is applied to NEF, and the method may include but is not limited to the following steps at 601-604.

At 601, a first network slice state subscription request sent by an AF or ASP is received.

At 602, the first network slice state subscription request is sent to the first NSACF.

At 603, network slice state response information sent by the first NASCF is received.

At 604, the network slice state response information is sent to the AF or ASP.

In an embodiment of the present disclosure, the first NSACF sends a Nnsacf_EventExposure_Subscribe/usubsubscribe Response (i.e., the network slice state response information) to the AF or ASP. After the first NSACF receives a slice event subscription request from the AF/ ASP, the first NSACF subscribes to a reporting event of the requested slice to each NSACF in the requested slice. After the first NSACF receives reporting information from each NSACF, the first NSACF notifies the reporting information to the requesting AF/ASP.

When an operating policy does not expose a slice identifier to an untrusted AF/ASP, and the current AF/ASP is an untrusted AF/ASP, the network slice state subscription request may be sent to NSACF via NEF. The above-mentioned Nnsacf_EventExposure subscribe/unsubscribe Request message is replaced with an Nnef_EventExposure subscribe/unsubscribe Request message between AF/ASP and NEF, and an Nnsacf_EventExposure subscribe/unsubscribe Request message between NEF and NSACF.

The NEF executes a mapping of an application or service identifier of the requesting AF/ASP to a slice identifier. When the NEF receives a subscription request from AF/ASP, the NEF maps the application or service identifier to the slice identifier, and sends the slice identifier to the NSACF.

By implementing embodiments of the present disclosure, the first slice event subscription request sent by the AF or ASP may be delivered via NEF, or the network slice state response information sent by the first NASCF may be delivered via NEF. In this way, errors in uploading network slice state information may be avoided, which facilitates improving user experiences.

In a possible implementation, the method further includes: selecting the first NSACF from a plurality of NSACFs corresponding to the network slice.

In a possible implementation, selecting the first NSACF from the plurality of NSACFs corresponding to the network slice includes: selecting the first NSACF from the plurality of NSACFs corresponding to the network slice through an NRF; or selecting the first NSACF from the plurality of NSACFs corresponding to the network slice through a local configuration.

In a possible implementation, the method further includes: aggregating state information sent by the plurality of NSACFs in the network slice state response information sent by the first NASCF.

In an embodiment of the present disclosure, after the first NSACF receives the first network slice state subscription request, the first NSACF parses the subscription event, subscription event filtering information and subscription event reporting mode information from the first network slice state subscription request, and aggregates state information of a requested network slice based on the first network slice state subscription request to generate the state response information of the requested network slice.

In a possible implementation, the method further includes: when the AF or ASP is an untrusted AF or ASP, after receiving the first network slice state subscription request sent by the AF or ASP, an application identifier or service identifier of the AF or ASP in the first network slice state subscription request is mapped to S-NSSAI, and the first network slice state subscription request after replacement is sent to the first NSACF.

In an embodiment of the present disclosure, when an operating policy does not expose a slice identifier to an untrusted AF/ASP, and the current AF/ASF is an untrusted AF/ASP, the network slice state subscription request may be sent to NSACF via NEF. The above-mentioned Nnsacf_EventExposure subscribe/unsubscribe Request message is replaced with an Nnef_EventExposure subscribe/unsubscribe Request message between AF/ASP and NEF, and an Nnsacf_EventExposure subscribe/unsubscribe Request message between NEF and NSACF. Then, first network slice state subscription request after replacement is sent to the first NSACF.

In a possible implementation, the method further includes: when the AF or ASP is an untrusted AF or ASP, after receiving the network slice state response information sent by the first NSACF, S-NSSAI in the network slice state response information is mapped to an application identifier or a service identifier, and network slice state response information after replacement is sent to the AF or ASP.

In an embodiment of the present disclosure, when an operating policy does not expose a slice identifier to an untrusted AF/ASP, and the AF/ASF is an untrusted AF/ASP, the network slice state subscription request may be sent to NSACF via NEF. The above-mentioned Nnsacf_EventExposure subscribe/unsubscribe Request message is replaced with an Nnef_EventExposure subscribe/unsubscribe Request message between AF/ASP and NEF, and an Nnsacf_EventExposure subscribe/unsubscribe Request message between NEF and NSACF. Then, network slice state response information after replacement is sent to the AF or ASP.

In a possible implementation, the first network slice state subscription request includes at least one of a subscription event, subscription event filtering information, and subscription event reporting mode information.

In a possible implementation, the subscription event includes at least one of:
a number of UEs registered on a requested network slice;
a number of packet data unit (PDU) sessions established on a requested network slice;
a ratio of a number of UEs registered on a requested network slice to a maximum number of UEs allowed to be registered;
a ratio of a number of PDU sessions established on a requested network slice to a maximum number of PDU sessions allowed to be established;
a number of UEs registered on a requested network slice, and a ratio of the number of UEs registered to a maximum number of UEs allowed to be registered; or
a number of PDU sessions established on a requested network slice, and a ratio of the number of PDU sessions established to a maximum number of PDU sessions allowed to be established.

Each NSACF configures a maximum number of terminal UEs allowed to access the network slice and a maximum number of PDU sessions allowed to be activated. NSACF supports monitoring and admission control of a maximum number of UEs and a maximum number of PDU sessions within a PLMN. When a number of UEs registered to the current slice exceeds a certain threshold (such as a maximum number of UEs in the slice), the NSAC may reject UE registration to control a number of UEs served not to exceed the maximum number of UEs in a slice configured by the network. When a number of PDU sessions activated in a slice exceeds a certain threshold (such as a maximum number of activated sessions), the NSAC may reject activation of a PDU session to control a current number of sessions not to exceed the maximum number of sessions configured by the network.

One NSACF may be deployed in the operator network. One NSACF may serve one or more S-NSSAI slices in one service area. In the service area, one S-NSSAI is processed by only one NSACF, which may be one NSACF instance or one NSACF Set. A PLMN may have one or more service areas.

The AF or ASP, based on ensuring the user experience or a need of improving the user experience, needs to obtain state information of a network slice, including information such as a current number of UEs registered in the slice, a number of currently-activated PDU sessions, a ratio of the current number of registered UEs and/or the number of activated PCU sessions in the slice to an overall threshold of the slice.

In a possible implementation, the subscription event filtering information includes at least one of:
S-NSSAI of a requested network slice;
an RA of a requested network slice;
a combination of S-NSSAI of a requested network slice and a DNN; or
an IoA of a requested network slice.

In an embodiment of the present disclosure, the subscription event filtering information is used to define a scope that needs to be reported, such as the slice identifier S-NSSAI, the RA, the combination of the S-NSSAI and the DNN, the IoA, etc.

In a possible implementation, the subscription event reporting mode information includes at least one of: a threshold that triggers reporting; or a periodic time interval for triggering reporting

In embodiments of the present disclosure, the subscription event reporting mode information is used to define a reporting mode. If a reporting information parameter is a threshold that triggers the reporting, the current value is reported when the threshold is reached. If the reporting information parameter is a periodic time interval that triggers the reporting, the current value is reported when the periodic time interval is reached.

In a possible implementation, the first network slice state subscription request further includes an immediate reporting identifier, in which the immediate reporting identifier is used to indicate the first NSACF to immediately send the network slice state response information upon receiving the first network slice state subscription request.

Referring to FIG. 7, it is a flowchart illustrating a method for reporting state information of a network slice according to an embodiment of the present disclosure. As shown in FIG. 7, the method is applied to AF or ASP, and the method may include but is not limited to the following steps at 701-702.

At 701, a first network slice state subscription request is sent to a first NSACF.

At 702, network slice state response information sent by the first NSACF is received.

By implementing this embodiment of the present disclosure, a first network slice state subscription request may be sent to the first NSACF, and corresponding state response information may be received. In this way, errors in uploading network slice state information may be avoided, which facilitate improving user experiences.

In a possible implementation, the first network slice state subscription request includes at least one of a subscription event, subscription event filtering information, and subscription event reporting mode information.

In a possible implementation, the subscription event includes at least one of:
a number of UEs registered on a requested network slice;
a number of PDU sessions established on a requested network slice;
a ratio of a number of UEs registered on a requested network slice to a maximum number of UEs allowed to be registered;
a ratio of a number of PDU sessions established on a requested network slice to a maximum number of PDU sessions allowed to be established;
a number of UEs registered on a requested network slice, and a ratio of the number of UEs registered to a maximum number of UEs allowed to be registered; or
a number of PDU sessions established on a requested network slice, and a ratio of the number of PDU sessions established to a maximum number of PDU sessions allowed to be established.

Each NSACF configures a maximum number of UEs allowed to access the network slice and a maximum number of PDU sessions allowed to be activated. NSACF supports monitoring and admission control of a maximum number of UEs and a maximum number of PDU sessions within a PLMN. When a number of UEs registered to the current slice exceeds a certain threshold (such as a maximum number of UEs in the slice), the NSAC may reject UE registration to control a number of UEs served not to exceed the maximum number of UEs in the slice configured by the network. When a number of PDU sessions activated in a slice exceeds a certain threshold (such as a maximum number of activated sessions), the NSAC may reject the activation of a PDU session to control a current number of sessions not to exceed the maximum number of sessions configured by the network.

One NSACF may be deployed in the operator network. One NSACF may serve one or more S-NSSAI slices in one service area. In the service area, one S-NSSAI is processed by only one NSACF, which may be one NSACF instance or one NSACF Set. One PLMN may have one or more service areas.

The AF or ASP, based on ensuring the user experience or a need of improving the user experience, needs to obtain state information of a network slice, including information such as a current number of UEs registered in the slice, a number of currently-activated PDU sessions, a ratio of the current number of registered UEs and/or the number of activated PCU sessions in the slice to an overall threshold of the slice.

In a possible implementation, the subscription event filtering information includes at least one of:
S-NSSAI of a requested network slice;
an RA of a requested network slice;
a combination of S-NSSAI of a requested network slice and a DNN; or
an IoA of a requested network slice.

In an embodiment of the present disclosure, the subscription event filtering information is used to define a scope that needs to be reported, such as the slice identifier S-NSSAI, the RA, the combination of the S-NSSAI and the DNN, the IoA, etc.

In a possible implementation, the subscription event reporting mode information includes at least one of: a threshold that triggers reporting; or a periodic time interval for triggering reporting

In embodiments of the present disclosure, the subscription event reporting mode information is used to define a reporting mode. If a reporting information parameter is a threshold that triggers the reporting, the current value is reported when the threshold is reached. If the reporting information parameter is a periodic time interval that triggers the reporting, the current value is reported when the periodic time interval is reached.

In a possible implementation, the first network slice state subscription request further includes an immediate reporting identifier, in which the immediate reporting identifier is used to indicate the first NSACF to immediately send the network slice state response information upon receiving the first network slice state subscription request.

In a possible implementation, the method further includes: selecting the first NSACF based on a network configuration; or selecting the first NSACF based on an operator policy.

In a possible implementation, the first NSACF is a primary NSACF or a proxy NSACF among a plurality of NSACFs corresponding to a requested network slice.

In a possible implementation, the method further includes: querying a plurality of NSACFs corresponding to a requested network slice through an NRF; or obtaining a plurality of NSACFs corresponding to a requested network slice through a local configuration.

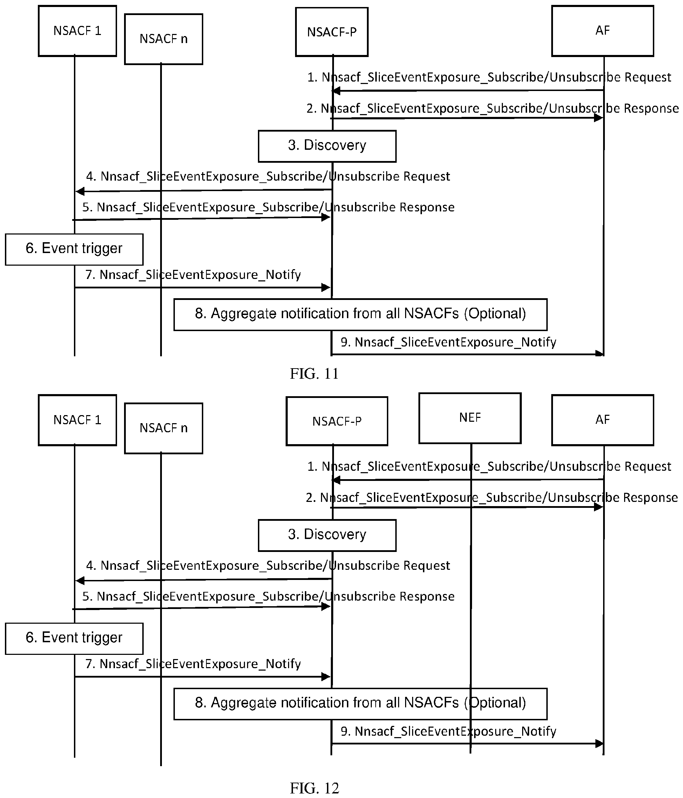

FIG. 11 is a flowchart illustrating a method for reporting state information of a network slice according to an embodiment of the present disclosure. As shown in FIG. 11, in order to subscribe to or cancel a reporting notify for a number of UEs or a number of PDU sessions in a network slice to an NSACF-P, an AF/ASP sends an Nnsacf_EventExposure subscribe/unsubscribe Request message to the NSACF-P. The message includes an event ID, an event filter, and event report information.

The event ID parameter defines an event ID subscribed, that is, a number of registered UEs, or a number of established PDU sessions, or a ratio of a number of registered UEs to a maximum number of UEs allowed to be registered, or a ratio of a number of established PDU sessions to a maximum number of PDU sessions allowed to be established, or a number of registered UEs and a ratio of the number of registered UEs to a maximum number of UEs allowed to be registered, or a number of established PDU sessions and a ratio of the number of established PDU sessions to a maximum number of PDU sessions allowed to be established.

The event filter parameter defines a scope of the report, such as a slice identifier S-NSSAI, an RA, a combination of the S-NSSAI and a DNN, the area of interest IoA, etc.

The event report information parameter defines a reporting mode, including a threshold, or a periodic report with a periodic time interval. If a reporting information parameter is a threshold that triggers the reporting, the current value is reported when the threshold is reached. If the reporting information parameter is a periodic time interval that triggers the reporting, the current value is reported when the periodic time interval is reached. A subscription request may also include an immediate report flag, where the flag is used to indicate a current value requested should be reported immediately upon receipt of the subscription request.

NSACF-P is one of a plurality of NSACFs in a requested slice. The NSACF-P may be selected by an operator configuration, or the AF/ASP requests randomly discovering and selecting the NSACF-P. The NSACF-P may be a primary NSACF or a proxy NSACF in the requested slice. When the NSACF-P is a primary NSACF, other NSACFs in the slice are slave NSACFs. When the NSACF-P is a proxy NSACF, the NSACF and other NSACFs in the slice do not have a master-slave relationship.

FIG. 12 is a flowchart illustrating a method for reporting state information of a network slice according to an embodiment of the present disclosure. As shown in FIG. 12, in order to subscribe to or cancel a reporting notify for a number of UEs or a number of PDU sessions in a network slice to an NSACF-P, an AF/ASP sends an Nnsacf_EventExposure subscribe/unsubscribe Request message to the NSACF-P. The message includes an event ID, an event filter, and event report information.

The event ID parameter defines an event ID subscribed, that is, a number of registered UEs, or a number of established PDU sessions, or a ratio of a number of registered UEs to a maximum number of UEs allowed to be registered, or a ratio of a number of established PDU sessions to a maximum number of PDU sessions allowed to be established, or a number of registered UEs and a ratio of the number of registered UEs to a maximum number of UEs allowed to be registered, or a number of established PDU sessions and a ratio of the number of established PDU sessions to a maximum number of PDU sessions allowed to be established.

The event filter parameter defines a scope of the report, such as a slice identifier S-NSSAI, an RA, a combination of the S-NSSAI and a DNN, the area of interest IoA, etc.

The event report information parameter defines a reporting mode, including a threshold, or a periodic report with a periodic time interval. If a reporting information parameter is a threshold that triggers the reporting, the current value is reported when the threshold is reached. If the reporting information parameter is a periodic time interval that triggers the reporting, the current value is reported when the periodic time interval is reached. A subscription request may also include an immediate report flag, where the flag is used to indicate a current value requested should be reported immediately upon receipt of the subscription request.

NSACF-P is one of a plurality of NSACFs in a requested slice. The NSACF-P may be selected by an operator configuration, or the AF/ASP requests randomly discovering and selecting the NSACF-P. The NSACF-P may be a primary NSACF or a proxy NSACF in the requested slice. When the NSACF-P is a primary NSACF, other NSACFs in the slice are slave NSACFs. When the NSACF-P is a proxy NSACF, the NSACF and other NSACFs in the slice do not have a master-slave relationship.

In the above-mentioned embodiments according to the present disclosure, the methods according to the embodiments of the present disclosure are introduced from the perspectives of a network device and a terminal device respectively. In order to implement the various functions in the methods according to the above-mentioned embodiments of the present disclosure, the network device and the terminal device may include a hardware structure and a software module to implement the above-mentioned functions in the form of a hardware structure, a software module, or a hardware structure plus a software module. Any of the above functions may be implemented in the form of a hardware structure, a software module, or a hardware structure plus a software module.

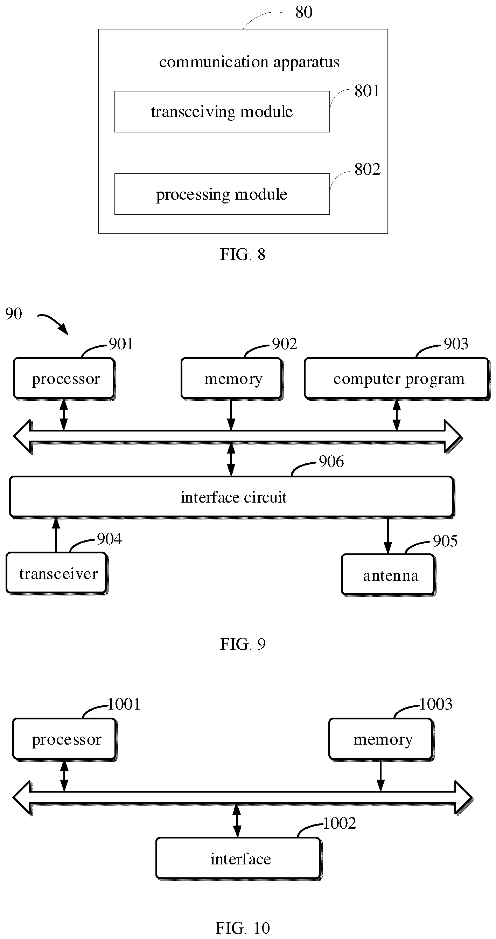

Referring to FIG. 8 , it is a structural diagram of a communication apparatus 80 according to an embodiment of the present disclosure. The communication apparatus 80 shown in FIG. 8 may include a transceiving module 801 and a processing module 802 . The transceiving module 801 may include a sending module and/or a receiving module. The sending module is used to implement a sending function, and the receiving module is used to implement a receiving function. The transceiving module 801 may implement a sending function and/or a receiving function.

The communication apparatus 80 may be a terminal device (such as the terminal device in the aforementioned method embodiment), or an apparatus in the terminal device, or an apparatus that may be used in conjunction with the terminal device. Alternatively, the communication apparatus 80 may be a network device, an apparatus in a network device, or an apparatus that may be used in conjunction with the network device.

When the communication apparatus 80 is a first NSACF device, the apparatus includes: a first receiving module, configured to receive a network slice state subscription request; a processing module, configured to generate network slice state response information; and a first sending module, configured to send the network slice state response information to a response information recipient.

When the communication apparatus 80 is an NEF, the apparatus includes: a second receiving module, configured to receive a first network slice state subscription request sent by an AF or an ASP; a second sending module, configured to send the first network slice state subscription request to a first NSACF; a third receiving module, configured to receive network slice state response information sent by the first NASCF; and a third sending module, configured to send the network slice state response information to the AF or ASP.

When the communication apparatus 80 is an AF or an ASP, the apparatus includes: a fourth sending module, configured to send a first network slice state subscription request to a first NSACF; and a fourth receiving module, configured to receive network slice state response information sent by the first NSACF.

Referring to FIG. 9, it is a structural diagram of another communication device 90 according to an embodiment of the present disclosure. The communication device 90 may be a network device, or a terminal device (such as the terminal device in the aforementioned method embodiment), or a chip, a chip system, or a processor that supports the network device to implement the above method, or a chip, a chip system, or a processor that supports the terminal device to implement the above method. The device may be used to implement the method described in the above method embodiment. For details, please refer to the description in the above method embodiments.

The communication device 90 may include one or more processors 901. The processor 901 may be a general-purpose processor or a special-purpose processor. For example, it may be a baseband processor or a central processing unit. The baseband processor may be used to process communication protocols and communication data, and the central processing unit may be used to control communication devices (such as base stations, baseband chips, terminal devices, terminal device chips, DU or CU, etc.), execute computer programs, and process computer program data.

Optionally, the communication device 90 may further include one or more memories 902, on which a computer program 903 may be stored, and the processor 901 executes the computer program 903, so that the communication device 90 performs the method described in the above method embodiments. Optionally, data may also be stored in the memory 902. The communication device 90 and the memory 902 may be provided separately or integrated together.

Optionally, the communication device 90 may further include a transceiver 904 and an antenna 905. The transceiver 904 may be referred to as a transceiving unit, a transceiver, or a transceiving circuit, etc., which is used to implement a transceiving function. The transceiver 904 may include a receiver and a transmitter. The receiver may be referred to as a receiving machine or a receiving circuit, etc., which is used to implement a receiving function. The transmitter may be referred to as a transmitting machine or a transmitting circuit, etc., which is used to implement a transmitting function.

Optionally, the communication device 90 may further include one or more interface circuits 906. The interface circuit 906 is used to receive code instructions and transmit them to the processor 901. The processor 901 runs the code instructions to enable the communication device 90 to execute the method described in the above method embodiments.

In one implementation, the processor 901 may include a transceiver for implementing the receiving and transmitting functions. For example, the transceiver may be a transceiving circuit, or an interface, or an interface circuit. The transceiving circuit, interface or interface circuit used to implement the receiving and transmitting functions may be separate or integrated. The above-mentioned transceiving circuit, interface or interface circuit may be used for reading and writing codes/data, or the above-mentioned transceiving circuit, interface or interface circuit may be used for transmitting or transferring signals.

In one implementation, the processor 901 may store a computer program 903, and the computer program 903 runs on the processor 901, so that the communication device 90 may execute the method described in the above method embodiments. The computer program 903 may be fixed in the processor 901. In this case, the processor 901 may be implemented in hardware.

In one implementation, the communication device 90 may include a circuit, and the circuit may implement the functions of transmitting or receiving or communicating in the aforementioned method embodiments. The processor and transceiver described in the disclosure may be implemented on an integrated circuit (IC), an analog IC, a radio frequency integrated circuit (RFIC), a mixed signal, an application specific integrated circuit (ASIC), a printed circuit board (PCB), an electronic device, etc. The processor and transceiver may also be manufactured using various IC process technologies, such as a complementary metal oxide semiconductor (CMOS), an nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be a network device or a terminal device (such as the terminal device in the aforementioned method embodiments), but the scope of the communication device described in the disclosure is not limited, and the structure of the communication device may not be limited to FIG. 9. The communication device may be a stand-alone device or may be part of a larger device. For example, the communication device may be:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal device, a smart terminal device, a cellular phone, a wireless device, a handset, a mobile unit, a vehicle device, a network device, a cloud device, an artificial intelligence device, etc.; and
(6) others, and so forth.

For the case where the communication device may be a chip or a chip system, reference may be made to the structural diagram of the chip shown in FIG. 10. The chip shown in FIG. 10 includes a processor 1001 and an interface 1002. There may be one or more processors 1001, and there may be a plurality of interfaces 1002.

Optionally, the chip further includes a memory 1003, and the memory 1003 is used to store necessary computer programs and data.

Those skilled in the related art may understand that, various illustrative logical blocks and steps listed in embodiments of the present disclosure, may be implemented by electronic hardware, computer software, or a combination of electronic hardware and computer software. Whether the function is implemented by hardware or software depends on specific applications and design requirements for an overall system. Those skilled in the art may implement the functions by using various methods for each specific application, but such an implementation should not be understood as going beyond the protection scope of embodiments of the present disclosure.

An embodiment of the present disclosure also provides a system for reporting state information of a network slice. The system includes a communication device as a terminal device (such as the terminal device in the aforementioned method embodiment) in the aforementioned FIG. 7 and a communication device as a network device. Alternatively, the system comprises a communication device as a terminal device (such as the terminal device in the aforementioned method embodiment) in the aforementioned FIG. 9 and a communication device as a network device.

A readable storage medium with instructions stored thereon is further provided in the disclosure. When the instructions are executed by a computer, steps in the any one method embodiment are implemented.

A computer program product is further provided in the disclosure. The computer program product implements functions of the above any one method embodiment when executed by a processor.

In the above embodiments, it may be implemented in whole or in part by software, hardware, firmware, or any combination. When implemented in software, it may be implemented in whole or in part in the form of a computer program product. The computer program product includes one or more computer programs. When the computer program is loaded and executed on a computer, the processes or functions described in the embodiments of the disclosure are generated in whole or in part. The computer may be a general-purpose computer, a special-purpose computer, a computer network, or other programmable device. The computer program may be stored in or transferred from one to another computer-readable storage medium, for example, the computer program may be transferred from a website, a computer, a server, or a data center to another website, another computer, another server or another data center through wired means (such as a coaxial cable, an optical fiber, a digital subscriber line (DSL)) or wireless means (such as infrared, wireless, microwave, etc.). The computer-readable storage medium may be any available medium that may be accessed by a computer or a data storage device such as a server, a data center, etc. that contains one or more available media integrated. The available media may be magnetic media (e.g., a floppy disk, a hard disk, a tape), optical media (e.g., a high-density digital video disc, DVD), or semiconductor media (e.g., a solid state disk, SSD) etc.

Those skilled in the art may understand that the first, second, and other numerical numbers involved in the disclosure are only for convenience of description and are not used to limit the scope of the embodiments of the disclosure and also indicate a sequential order.

The term "at least one" in the disclosure can also be described as one or more, and "a plurality of" may be two, three, four or more, which is not limited by the disclosure. In the embodiments of the disclosure, for a technical feature, the technical feature is distinguished by "first", "second", "third", "A", "B", "C" and "D", etc. The technical features described in "first", "second", "third", "A", "B", "C" and "D" are in no particular order or size sequence.

The corresponding relationships shown in each table in the disclosure may be configured or predefined. The values of the information in each table are only examples and may be configured as other values, which is not limited by the disclosure. When configuring the correspondence between information and each parameter, it is not necessarily required to configure all the correspondences shown in each table. For example, in the table in the disclosure, the corresponding relationships shown in some rows may not be configured. For another example, appropriate deformation adjustments may be made based on the above tables, such as splitting, merging, etc. The names of the parameters shown in the titles of the above tables may also be other names that may be understood by the communication device, and the values or expressions of the parameters may also be other values or expressions that may be understood by the communication device. When implementing the above tables, other data structures may also be used, such as arrays, queues, containers, stacks, linear lists, pointers, linked lists, trees, graphs, structures, classes, heaps, hash tables, etc.

Predefinition in the disclosure may be understood as definition, pre-definition, storage, pre-storage, pre-negotiation, pre-configuration, solidification, or pre-burning.

Those skilled in the art may be aware that the units and algorithm steps of each example described in conjunction with the embodiments disclosed herein can be implemented with electronic hardware, or a combination of computer software and electronic hardware. Whether these functions are executed in hardware or software depends on a specific application and design constraints of the technical solution. Those skilled in the art may implement the described functionality using different methods for each specific application, but such implementations should not be considered to go beyond the scope of the disclosure.

Those skilled in the art may clearly understand that for the convenience and conciseness of description, the specific working processes of the systems, devices and units described above may be referred to the corresponding processes in the foregoing method embodiments, which will not be repeated here.

The above are only specific embodiments of the disclosure, but the protection scope of the disclosure is not limited. Any person in the technical field may easily think of changes or substitutions within the technical scope disclosed in the disclosure, which should be covered by the protection scope of the disclosure. Therefore, the protection scope of the disclosure should be determined by the protection scope of the claims.

## Claims

1. A method for reporting state information of a network slice, applied to a first network slice admission control function (NSACF), the method comprising:
receiving a network slice state subscription request;
generating network slice state response information; and
sending the network slice state response information to a response information recipient.

2. The method according to claim 1, wherein the network slice state subscription request is a first network slice state subscription request, the first network slice state subscription request is sent by an application function (AF) or an application service provider (ASP), the AF or ASP is the response information recipient, the first network slice state subscription request comprises at least one of a subscription event, subscription event filtering information or subscription event reporting mode information.

3. The method according to claim 2, wherein the subscription event comprises at least one of:
a number of UEs registered on a requested network slice;
a number of packet data unit (PDU) sessions established on a requested network slice;
a ratio of a number of UEs registered on a requested network slice to a maximum number of UEs allowed to be registered;
a ratio of a number of PDU sessions established on a requested network slice to a maximum number of PDU sessions allowed to be established;
a number of UEs registered on a requested network slice, and a ratio of the number of UEs registered to a maximum number of UEs allowed to be registered; or
a number of PDU sessions established on a requested network slice, and a ratio of the number of PDU sessions established to a maximum number of PDU sessions allowed to be established.

4. The method according to claim 2, wherein the subscription event filtering information comprises at least one of:
single network slice selection assistance information (S-NSSAI) of a requested network slice;
a registration area (RA) of a requested network slice;
a combination of S-NSSAI of a requested network slice and a data network name (DNN); or
an area of interest (IoA) of a requested network slice.

5. The method according to claim 2, wherein the subscription event reporting mode information comprises at least one of: a threshold that triggers reporting; or a periodic time interval for triggering reporting.

6. The method according to claim 2, wherein the first network slice state subscription request further comprises an immediate reporting identifier, wherein the immediate reporting identifier is used to indicate the first NSACF to immediately send the network slice state response information upon receiving the first network slice state subscription request.

7. The method according to claim 1, wherein when the network slice state subscription request is a second network slice state subscription request, the second network slice state subscription request is sent by an application function (AF) or an application service provider (ASP), the AF or ASP is the response information recipient, the second network slice state subscription request comprises a requested network slice, the requested network slice corresponds to a plurality of NSACFs, and generating the network slice state response information comprises:
sending a state subscription request for the requested network slice to a second NSACF among the plurality of NSACFs corresponding to the requested network slice, wherein the second NSACF belongs to the plurality of NSACFs corresponding to the requested network slice;
receiving state information of the requested network slice fed back by the second NSACF; and
generating the network slice state response information based on the state information of the requested network slice fed back by the second NSACF.

8. The method according to claim 1, wherein when the network slice state subscription request is a third network slice state subscription request, the third network slice state subscription request is sent by a third NSACF, the third NSACF is the response information recipient, the third NSACF is one of second NSACFs, the third network slice state subscription request comprises a requested network slice, the requested network slice corresponds to a plurality of NSACFs, and the method further comprises:
sending a state subscription request for the requested network slice to all the second NSACFs in the requested network slice;
receiving state information of the requested network slice fed back by all the second NSACFs; and
generating the network slice state response information based on the state information of the requested network slice fed back by the second NSACFs, and returning the network slice state response information to the third NSACF.

9. The method according to claim 7 or 8, wherein generating the network slice state response information comprises:
aggregating the state information of the requested network slice fed back by the second NSACF to generate the network slice state response information.

10. The method according to any one of claims 1-9, wherein the first NSACF is selected by an application function (AF) or an application service provider (ASP) based on a network configuration or an operator policy.

11. The method according to any one of claims 1-9, wherein the first NSACF is a primary NSACF or a proxy NSACF among a plurality of NSACFs corresponding to a requested network slice.

12. The method according to claim 7 or 8, wherein the second network slice state subscription request or the third network slice state subscription request comprises at least one of a subscription event, subscription event filtering information and subscription event reporting mode information.

13. The method according to claim 7 or 8, further comprising:
querying the plurality of NSACFs corresponding to the requested network slice through a network repository function (NRF); or
obtaining the plurality of NSACFs corresponding to the requested network slice through a local configuration.

14. The method according to claim 2, further comprising:
filtering the network slice state response information based on the subscription event filtering information.

15. The method according to claim 2, further comprising:
determining whether a reporting condition is met based on the subscription event reporting mode information; and
in response to the reporting condition being met, reporting the network slice state response information.

16. The method according to claim 1, wherein receiving the network slice state subscription request comprises:
when an application function (AF) or an application service provider (ASP) that sends the network slice state subscription request is an untrusted AF or ASP, receiving the network slice state subscription request sent by the AF or ASP through a network exposure function (NEF).

17. The method according to claim 16, wherein the first NSACF is selected by the NEF.

18. The method according to claim 17, wherein the first NSACF is selected by the NEF through a network repository function (NRF) or a local configuration.

19. The method according to claim 17, wherein the network slice state response information comprises state information sent by a plurality of NSACFs corresponding to a requested network slice, wherein the network slice state response information is generated by the first NSACF aggregating state information sent by the plurality of NSACFs in the network slice state response information;
when the first NSACF does not aggregate the state information sent by the plurality of NSACFs in the network slice state response information, the network slice state response information is generated by the NEF aggregating the state information sent by the plurality of NSACFs in the network slice state response information.

20. A method for reporting state information of a network slice, applied to a network exposure function (NEF), the method comprising:
receiving a first network slice state subscription request sent by an application function (AF) or an application service provider (ASP);
sending the first network slice state subscription request to a first network slice admission control function (NSACF);
receiving network slice state response information sent by the first NASCF; and
sending the network slice state response information to the AF or ASP.

21. The method according to claim 20, further comprising:
selecting the first NSACF from a plurality of NSACFs corresponding to the network slice.

22. The method according to claim 21, wherein selecting the first NSACF from the plurality of NSACFs corresponding to the network slice comprises:
selecting the first NSACF from the plurality of NSACFs corresponding to the network slice through a network repository function (NRF); or
selecting the first NSACF from the plurality of NSACFs corresponding to the network slice through a local configuration.

23. The method according to claim 21, further comprising:
aggregating state information sent by the plurality of NSACFs in the network slice state response information sent by the first NASCF.

24. The method according to claim 20, wherein when the AF or ASP is an untrusted AF or ASP, the method further comprises:
receiving a first network slice state subscription request sent by the AF or ASP, mapping an application identifier or a service identifier of the AF or ASP in the first network slice state subscription request to single network slice selection assistance information (S-NSSAI), and sending a replaced first network slice state subscription request to the first NSACF; and
receiving the network slice state response information sent by the first NSACF, mapping the S-NSSAI in the network slice state response information to an application identifier or a service identifier, and send a replaced network slice state response information to the AF or ASP.

25. The method according to claim 20, wherein the first network slice state subscription request comprises at least one of a subscription event, subscription event filtering information, and subscription event reporting mode information.

26. The method according to claim 25, wherein the subscription event comprises at least one of:
a number of user equipment (UEs) registered on a requested network slice;
a number of packet data unit (PDU) sessions established on a requested network slice;
a ratio of a number of UEs registered on a requested network slice to a maximum number of UEs allowed to be registered;
a ratio of a number of PDU sessions established on a requested network slice to a maximum number of PDU sessions allowed to be established;
a number of UEs registered on a requested network slice, and a ratio of the number of UEs registered to a maximum number of UEs allowed to be registered; or
a number of PDU sessions established on a requested network slice, and a ratio of the number of PDU sessions established to a maximum number of PDU sessions allowed to be established.

27. The method according to claim 25, wherein the subscription event filtering information comprises at least one of:
single network slice selection assistance information (S-NSSAI) of a requested network slice;
a registration area (RA) of a requested network slice;
a combination of S-NSSAI of a requested network slice and a data network name (DNN); or
an area of interest (IoA) of a requested network slice.

28. The method according to claim 25, wherein the subscription event reporting mode information comprises at least one of: a threshold that triggers reporting; or a periodic time interval for triggering reporting.

29. The method according to claim 25, wherein the first network slice state subscription request further comprises an immediate reporting identifier, wherein the immediate reporting identifier is used to indicate the first NSACF to immediately send the network slice state response information upon receiving the first network slice state subscription request.

30. A method for reporting state information of a network slice, applied to an application function (AF) or an application service provider (ASP), the method comprising:
sending a first network slice state subscription request to a first network slice admission control function (NSACF); and
receiving network slice state response information sent by the first NSACF.

31. The method according to claim 30, wherein the first network slice state subscription request comprises at least one of a subscription event, subscription event filtering information, and subscription event reporting mode information.

32. The method according to claim 31, wherein the subscription event comprises at least one of:
a number of user equipment (UEs) registered on a requested network slice;
a number of packet data unit (PDU) sessions established on a requested network slice;
a ratio of a number of UEs registered on a requested network slice to a maximum number of UEs allowed to be registered;
a ratio of a number of PDU sessions established on a requested network slice to a maximum number of PDU sessions allowed to be established;
a number of UEs registered on a requested network slice, and a ratio of the number of UEs registered to a maximum number of UEs allowed to be registered; or
a number of PDU sessions established on a requested network slice, and a ratio of the number of PDU sessions established to a maximum number of PDU sessions allowed to be established.

33. The method according to claim 31, wherein the subscription event filtering information comprises at least one of:
single network slice selection assistance information (S-NSSAI) of a requested network slice;
a registration area (RA) of a requested network slice;
a combination of S-NSSAI of a requested network slice and a data network name (DNN); or
an area of interest (IoA) of a requested network slice.

34. The method according to claim 31, wherein the subscription event reporting mode information comprises at least one of: a threshold that triggers reporting; or a periodic time interval for triggering reporting.

35. The method according to claim 31, wherein the first network slice state subscription request further comprises an immediate reporting identifier, wherein the immediate reporting identifier is used to indicate the first NSACF to immediately send the network slice state response information upon receiving the first network slice state subscription request.

36. The method according to any one of claims 30 to 35, further comprising:
selecting the first NSACF based on a network configuration; or
selecting the first NSACF based on an operator policy.

37. The method according to any one of claims 30-35, wherein the first NSACF is a primary NSACF or a proxy NSACF among a plurality of NSACFs corresponding to a requested network slice.

38. The method according to claim 30, further comprising:
querying a plurality of NSACFs corresponding to a requested network slice through a network repository function (NRF); or
obtaining a plurality of NSACFs corresponding to a requested network slice through a local configuration.

39. An apparatus for reporting state information of a network slice, applied to a first network slice admission control function (NSACF), the apparatus comprising:
a first receiving module, configured to receive a network slice state subscription request;
a processing module, configured to generate network slice state response information;
a first sending module, configured to send the network slice state response information to a response information recipient.

40. An apparatus for reporting state information of a network slice, applied to a network exposure function (NEF), the apparatus comprising:
a second receiving module, configured to receive a first network slice state subscription request sent by an application function (AF) or an application service provider (ASP);
a second sending module, configured to send the first network slice state subscription request to a first network slice admission control function (NSACF);
a third receiving module, configured to receive network slice state response information sent by the first NASCF; and
a third sending module, configured to send the network slice state response information to the AF or ASP.

41. An apparatus for reporting state information of a network slice, applied to an application function (AF) or an application service provider (ASP), the apparatus comprising:
a fourth sending module, configured to send a first network slice state subscription request to a first network slice admission control function (NSACF);
a fourth receiving module, configured to receive network slice state response information sent by the first NSACF.

42. A communication device, comprising: a transceiver; a memory; a processor, connected to the transceiver and the memory respectively, wherein the processor is configured to execute computer executable instructions on the memory, control wireless signal reception and transmission of the transceiver, and capable of implementing the method according to any one of claims 1-19 or 20-29 or 30-38.

43. A computer storage medium storing computer executable instructions, wherein when the computer executable instructions are executed by a processor, the method according to any one of claims 1-19 or 20-29 or 30-38 is caused to be implemented.
